# EUROPÄISCHE PATENTSCHRIFT

(11) **EP 3 362 652 B1**
(45) Veröffentlichungstag und Bekanntmachung des Hinweises auf die Patenterteilung: **14.07.2021**
(21) Anmeldenummer: 16767178.3
(22) Anmeldetag: 07.09.2016
(51) Int. Cl.: F01M 1/02, F01M 1/16, F16H 57/04

(54) **FÖRDEREINRICHTUNG FÜR EIN KRAFTFAHRZEUG**
DELIVERY DEVICE FOR A MOTOR VEHICLE
DISPOSITIF DE TRANSPORT POUR VÉHICULE AUTOMOBILE

(30) Priorität: 13.10.2015 DE 102015219771
(43) Veröffentlichungstag der Anmeldung: 22.08.2018
(73) Patentinhaber: Vitesco Technologies GmbH, 30165 Hannover (DE)
(72) Erfinder: BÖHM, Christian, 60316 Frankfurt am Main (DE)
(86) Internationale Anmeldenummer: PCT/EP2016/071050
(87) Internationale Veröffentlichungsnummer: WO 2017/063793

(56) Entgegenhaltungen:
- EP-A1- 2 642 126
- WO-A1-2014/192352
- DE-A1-102006 030 041
- DE-A1-102011 084 542
- DE-A1-102012 213 847
- DE-C1- 19 750 675
- JP-A- 2014 231 770
- US-A1- 2013 151 131

## Beschreibung

Die Erfindung betrifft eine Fördereinrichtung für ein Kraftfahrzeug mit zur Förderung von Öl aus einem Ölsumpf zu einem Schmierölkreislauf einer Brennkraftmaschine oder zu einem Getriebe mit einer von einem mechanischen Direktantrieb und von einem zuschaltbaren Elektroantrieb antreibbaren Ölpumpe, wobei die Ölpumpe mit einem Rotor und einem den Rotor umschließenden Läuferteil zwei relativ zueinander bewegliche Bauteile zur Förderung des Öls hat und der mechanische Direktantrieb mit einem ersten der relativ zueinander beweglichen Bauteile und der zuschaltbare Elektroantrieb mit einem zweiten der relativ zueinander beweglichen Bauteile verbunden ist.

Die DE 10 2011 084 542 A1 offenbart eine Fördereinrichtung zur Förderung von Öl aus einem Vorratsbehälter zu einem Getriebe eines Kraftfahrzeuges. Diese Fördereinrichtung hat eine Ölpumpe mit zwei relativ zueinander beweglichen Bauteilen zur Förderung des Öls. Die relativ zueinander beweglichen Bauteile werden von einem Direktantrieb oder einem zuschaltbaren Elektroantrieb angetrieben.

Die DE 10 2006 030 041 A1 offenbart eine Pumpenvorrichtung eines Fahrzeuggetriebes mit zwei Pumpenteilen. Eines der Pumpenteile lässt sich von einer Verbrennungsmaschine und das andere der Pumpenteile von einer elektrischen Maschine antreiben.

Die EP 2 642 126 A1 offenbart eine Ölpumpe mit einer mechanischen Pumpe und einer elektrischen Pumpe.

Die WO 2014/192352 A1 offenbart eine Ölpumpensteuerung, bei der ein elektrischer Motor permanent mit dem Rotor einer Ölpumpe verbunden ist. Zwischen dem elektrischen Motor und einer Antriebswelle einer Brennkraftmaschine ist ein Schaltventil angeordnet.

Eine Fördereinrichtung ist beispielsweise aus der DE 10 2011 084 542 A1 bekannt. Bei dieser Fördereinrichtung lässt sich die Ölpumpe wahlweise von dem Direktantrieb oder dem zuschaltbaren Elektroantrieb antreiben. Zudem ist ein Parallelbetrieb beider Antriebe möglich. Die Förderleistung der Ölpumpe wird angehoben, wenn der Direktantrieb bei einem Betriebszustand mit zu geringer Drehzahl läuft. Dieser Zustand wird in seltenen Fällen bei hohen Bedarfsanforderungen der Brennkraftmaschine erreicht. Dies führt jedoch dazu, dass die Ölpumpe auf eine ausreichende Förderleistung des Direktantriebs für die Grundlast ausgelegt sein muss. In der Praxis bedeutet dies, dass die Ölpumpe sehr stark dimensioniert sein muss. Eine solche starke Dimensionierung ist jedoch bei Brennkraftmaschinen sehr störend.

Aus den Druckschriften JP 2014231770 A, DE 19750675 C1 ist jeweils eine Ölpumpe bekannt, die sowohl verbrennungsmotorisch als auch elektromotorisch antreibbar ist.

Der Erfindung liegt das Problem zugrunde, eine Fördereinrichtung der eingangs genannten Art so weiter zu bilden, dass sie den Einsatz einer kompakten Ölpumpe ermöglicht.

Dieses Problem wird erfindungsgemäß dadurch gelöst, dass die Leistung der Ölpumpe über den Direktantrieb auf einen Arbeitspunkt bei mittlerer oder hoher Drehzahl der Brennkraftmaschine und Betriebstemperatur ausgelegt ist und der zuschaltbare Elektroantrieb mit einer Steuereinrichtung zur Erhöhung der Leistung der Ölpumpe auf den tatsächlichen Bedarf verbunden ist.

Durch diese Gestaltung wird bereits beim Leerlauf der Brennkraftmaschine der Elektroantrieb zugeschaltet und stellt eine ausreichende Versorgung des Getriebes oder der Brennkraftmaschine mit Öl sicher. Daher kann als Ölpumpe eine Konstantpumpe mit deutlich niedrigerer Förderleistung eingesetzt werden, als bei einem konstanten Antrieb. In der Praxis hat sich gezeigt, dass dank der Erfindung eine Ölpumpe mit einem Fördervolumen von 20 cm³ bei einem konstanten Antrieb durch eine Ölpumpe mit einem Fördervolumen von 10 cm³ beim zuschaltbaren Elektroantrieb ersetzt werden kann. Die Betriebstemperatur liegt etwa bei 90 - 110° Öltemperatur und entspricht dem warmgelaufenen Zustand der Brennkraftmaschine, der im Dauerbetrieb erreicht wird. Die mittlere oder hohe Drehzahl ist anhand der Nenndrehzahl der Brennkraftmaschine festgelegt. Dank der Erfindung lässt sich die Ölpumpe über das erste der relativ zueinander beweglichen Bauteile, oder das zweite der relativ zueinander beweglichen Bauteile oder durch Antrieb beider Bauteile antreiben. Da die über den Direktantrieb zu bringende Leistung der Ölpumpe auf den Leerlauf ausgelegt ist, wird der zuschaltbare Elektroantrieb in erster Linie zur Deckung eines erhöhten Bedarfs bei geringen Drehzahlen herangezogen. Der Arbeitspunkt ist damit auf mittlere oder niedrige Öltemperaturen bei den genannten Drehzahlen ausgelegt. Bei hohen Temperaturen oder Übertemperaturen wird dann ebenfalls der Elektroantrieb zugeschaltet.

Die Ölpumpe gestaltet sich erfindungsgemäss konstruktiv besonders einfach, wenn ein eine Druckseite der Ölpumpe von der Umgebung trennender Gehäusetopf eine zu einem Wellenabschnitt des zuschaltbaren Elektroantriebs geführte Verjüngung hat, wenn die Verjüngung drehfest mit dem Wellenabschnitt verbunden ist und gegenüber einem Gehäuseteil der Ölpumpe abgedichtet ist. Durch diese Gestaltung ist der Einsatz eines besonders kleinen Durchmessers des Dichtrings möglich. Die Dichtheit der Ölpumpe hat daher eine besonders hohe Zuverlässigkeit.

Die Förderleistung der Ölpumpe lässt sich gemäß einer anderen vorteilhaften Weiterbildung der Erfindung in einem besonders weiten Bereich frei regeln, wenn die Steuereinrichtung einen Generatormodus für den zuschaltbaren Elektroantrieb zur Verringerung der Leistung der Ölpumpe hat. Durch diese Gestaltung ist der Elektroantrieb im Generatormodus zur Übertragung einer Bremslast in das zweite der beweglichen Bauteile ausgebildet. Ist die Bremslast gering, wird der Direktantrieb über das erste der relativ zueinander beweglichen Bauteile und das zu fördernde Öl das zweite, mit dem Elektroantrieb verbundene Bauteil mitdrehen, was zu einer geringen Förderleistung der Ölpumpe führt. Ist die Bremslast hoch, wird das zweite, mit dem Elektroantrieb verbundene Bauteil festgehalten und die Ölförderung entsprechend der Leistung des mechanischen Direktantriebs entsprechend hoch. Dank der Erfindung kann das mit dem zuschaltbaren Elektroantrieb verbundene zweite Bauteil der Ölpumpe entsprechend der Steuerung durch die Steuereinrichtung wahlweise in die eine oder die andere Richtung bewegt werden. Damit lässt sich der zuschaltbare Elektroantrieb bei hohen Drehzahlen des mechanischen Direktantriebs zur Verringerung der Leistung der Ölpumpe heranziehen.

Eine ständige Bestromung des zuschaltbaren Elektroantriebs lässt sich gemäß einer anderen vorteilhaften Weiterbildung der Erfindung einfach vermeiden, wenn das von dem zuschaltbaren Elektroantrieb angetriebene Bauteil einen Freilauf oder eine Bremse zur Abstützung des von dem Direktantrieb erzeugten Moments hat.

Die Abstützung des Drehmoments des Elektromotors gestaltet sich gemäß einer anderen vorteilhaften Weiterbildung der Erfindung konstruktiv besonders einfach, wenn der Freilauf oder die Bremse eine Antriebswelle des zuschaltbaren Elektroantriebs gegenüber einem Gehäuseteil abstützt.

Ein besonders hoher Wirkungsgrad und ein sehr großer Bereich der Förderleistung lassen sich gemäß einer anderen vorteilhaften Weiterbildung der Erfindung einfach erreichen, wenn die Ölpumpe als doppelhubige Flügelzellenpumpe mit zwei einander gegenüberliegenden Hubräumen ausgebildet ist. Die doppelhubige Flügelzellenpumpe ist für die vorgesehenen Einsatzgebiete im Schmierkreislauf der Brennkraftmaschine oder auch im Getriebe wegen der über einen großen Bereich regelbaren Leistung besonders geeignet. Die häufig eingesetzten G-Rotorpumpen oder Zahnradpumpen vermögen zwar hohe Förderdrücke zu erzeugen. Die doppelhubige Flügelzellenpumpe nach der Erfindung ermöglicht jedoch mit einer entsprechenden Bestromung durch die Steuereinrichtung wahlweise hohe Förderdrücke und/oder hohe Fördervolumen. Die Doppelhubigkeit verbindet die Vorteile des hohen Wirkungsgrades bei einem besonders geringen Bauraum.

Bei einem Neustart der Ölpumpe lässt sich gemäß einer anderen vorteilhaften Weiterbildung der Erfindung eine sofortige Förderung von Öl sicherstellen, wenn die doppelhubige Flügelzellenpumpe ein feststehendes Führungselement zur Vorspannung der Flügel gegen das radial äußere Läuferteil hat. Diese Gestaltung ist insbesondere für den Einsatz der Fördereinrichtung zur Förderung von Öl in dem Schmierölkreislauf der Brennkraftmaschine vorteilhaft, da hierdurch die Ölpumpe unmittelbar nach dem Start zuverlässig Öl fördert.

Zur weiteren Verringerung der Abmessungen der Fördereinrichtung trägt es gemäß einer anderen vorteilhaften Weiterbildung der Erfindung bei, wenn das feststehende Führungselement in den Rotor hineinragt.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: schematisch eine Brennkraftmaschine eines Kraftfahrzeuges mit einer erfindungsgemäßen Fördereinrichtung,
- Fig.2: schematisch ein konstruktives Ausführungsbeispiel einer Ölpumpe der Fördereinrichtung aus Figur 1,
- Fig.3: eine Kennlinie zur Auslegung der Ölpumpe aus Figur 1 mit einer Bedarfskennlinie der Brennkraftmaschine.

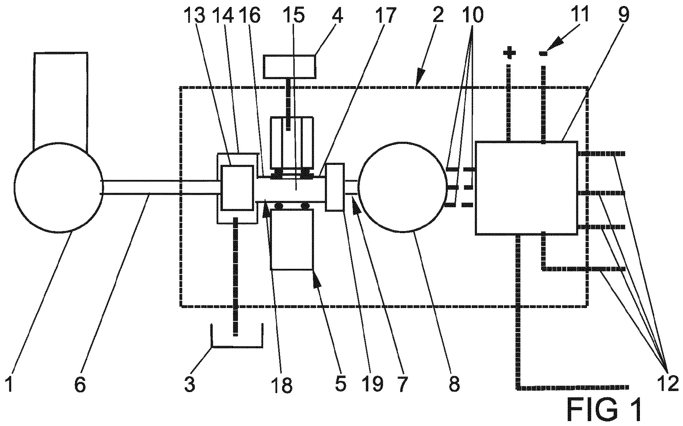

Figur 1 zeigt schematisch eine Brennkraftmaschine 1 eines Kraftfahrzeuges mit einer Fördereinrichtung 2 zur Förderung von Öl von einem Ölsumpf 3 zu einem Verbraucher 4. Bei dem Verbraucher 4 kann es sich um einen Schmiermittelkreislauf der Brennkraftmaschine 1 oder einem mit der Brennkraftmaschine 1 verbundenen und nicht dargestellten Getriebe handeln. Die Fördereinrichtung 2 hat eine Ölpumpe 5 mit einem Direktantrieb 6 über die Brennkraftmaschine 1 und einen zuschaltbaren Elektroantrieb 7. Ein Elektromotor 8 des zuschaltbaren Elektroantriebs 7 ist mit einer elektronischen Steuereinrichtung 9 verbunden, welche den Elektroantrieb 7 in Abhängigkeit von Eingangssignalen wie einer Motordrehzahl, dem angeforderten Motormoment, der Öltemperatur und einem Solldruck über Steuerleitungen 10 ansteuert und mit elektrischem Strom eines Bordnetzes 11 des Kraftfahrzeuges versorgt. Für die Versorgung mit den Eingangssignalen ist die Steuereinrichtung 9 mit Signalleitungen 12 verbunden.

Die Ölpumpe 5 hat einen Rotor 13 und einem den Rotor 13 umschließendes Läuferteil 14. Der Rotor 13 ist mit dem Direktantrieb 6 verbunden, während das Läuferteil 14 von dem zuschaltbaren Elektroantrieb 7 antreibbar ist. Damit hat die Ölpumpe 5 zwei relativ zueinander bewegliche Bauteile zur Förderung des Öls. Die Ölpumpe 5 hat einen eine Druckseite 15 von der Umgebung trennenden Gehäusetopf 16. Der Gehäusetopf 16 hat eine zu einem Wellenabschnitt 17 des zuschaltbaren Elektroantriebs 7 geführte Verjüngung 18. Weiterhin ist in dem Wellenabschnitt 17 des zuschaltbaren Elektroantriebs 7 ein Freilauf 19 angeordnet, welcher ein Moment des Direktantriebs 6 bei nicht bestromten Elektroantrieb 7 gegenüber einem feststehenden Bauteil abstützt.

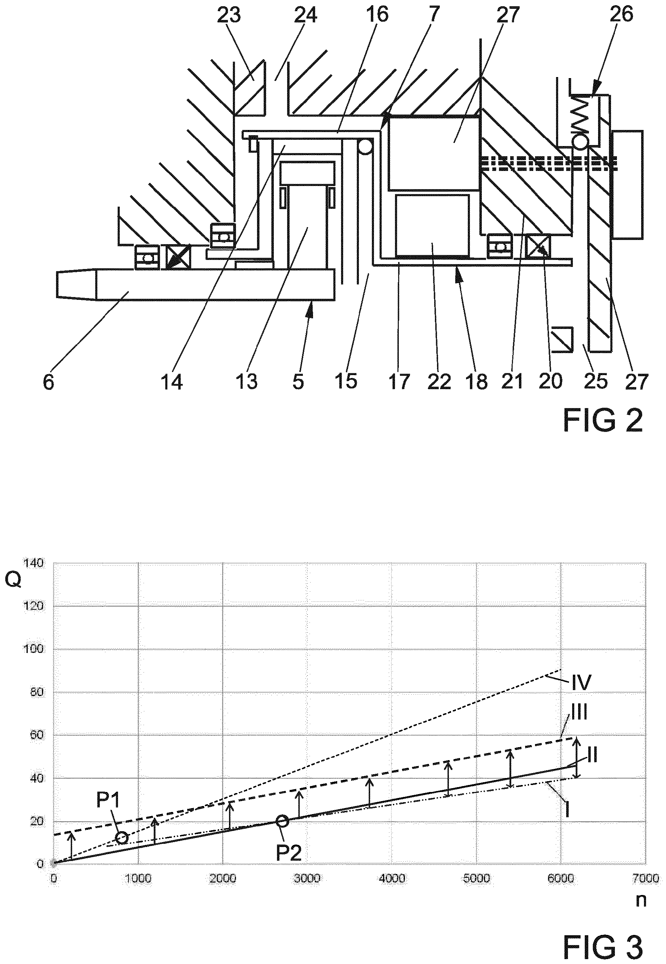

In einer alternativen in Figur 2 dargestellten Ausführungsform wird der zuschaltbare Elektroantrieb 7 ständig von der Steuereinrichtung 9 angesteuert und vermag, wenn die Leistung des Direktantriebs 6 ausreicht, dessen Moment abzustützen. Sofern die Leistung des Direktantriebs 6 größer ist als die der Ölpumpe 5 zuzuführenden Leistung kann der Elektroantrieb 8 in einen Generatormodus geschaltet werden und damit die Leistung der Ölpumpe 5 verringern. Bei dieser Ausführungsform ist kein Freilauf an dem zuschaltbaren Elektroantrieb 7 vorgesehen. Ansonsten ist die Ausführungsform nach Figur 2 wie die in Figur 1 aufgebaut.

Figur 2 zeigt schematisch ein konstruktives Ausführungsbeispiel der Ölpumpe 5. Zur Vereinfachung der Zeichnung ist nur eine Hälfte der Ölpumpe 5 dargestellt. Hierbei ist zu erkennen, dass die Verjüngung 18 des Gehäusetopfs 16 mittels eines Dichtrings 20 gegenüber einem Gehäuseteil 21 der Ölpumpe 5 abgedichtet ist. Der Wellenabschnitt 17 ist mit einem Rotor 22 des Elektroantriebs 7 verbunden. Ein weiteres Gehäuseteil 23 hat einen Einlasskanal 24 der Ölpumpe 5. Dieser Einlasskanal 24 ist mit dem in Figur 1 dargestellten Ölsumpf 3 verbunden. Ein zu dem Verbraucher 4 aus Figur 1 führender Auslasskanal 25 der Ölpumpe 5 ist zusammen mit einem Überdruckventil 26 in einem anderen Gehäuseteil 27 angeordnet. Ein Stator 28 des Elektroantriebs 7 umschließt den Rotor 22 und ist drehfest in der Ölpumpe 5 angeordnet.

Figur 3 zeigt ein Diagramm des Fördervolumens der Ölpumpe 5 über die Drehzahl der Brennkraftmaschine 1. Die Brennkraftmaschine 1 hat bei Betriebstemperatur von ca. 90 - 110 °C einen Ölbedarf Q über die Drehzahl n, welcher als Kennlinie I dargestellt ist. Die von dem Direktantrieb 6 nach der Erfindung zu erbringende Leistung ist mit II gekennzeichnet. Mit III ist eine beim Parallelbetrieb des Direktantriebs 6 und des Elektroantriebs 7 maximale Leistung der Ölpumpe 5 dargestellt. Bei einer mittleren Drehzahl von beispielhaft etwa 2700 Umdrehungen pro Minute entspricht die für den Betrieb der Ölpumpe 5 erforderliche Leistung der von dem Direktantrieb 6 erzeugten Leistung. Dieser Punkt ist in dem Diagramm mit P2 gekennzeichnet. Liegt die Drehzahl des Direktantriebs 6 unterhalb der mittleren Drehzahl wird die Leistung der Ölpumpe 5 durch Zuschaltung des Elektroantriebs 7 angehoben. Oberhalb der mittleren Drehzahl kann der Elektroantrieb 7 in einen Generatormodus geschaltet werden, um die Leistung des Direktantriebs 5 zu verringern. Alternativ kann auch überschüssig gefördertes Öl über das in Figur 2 dargestellte Überdruckventil 26 abgelassen werden. Von der Linie II senkrecht nach oben und unten gerichtete Pfeile entsprechen damit der Steigerung oder der Verringerung der von dem Direktantrieb 6 erzeugten Leistung durch den zuschaltbaren Elektroantrieb 7.

Mit IV ist eine Kennlinie eines Antriebs nach dem Stand der Technik dargestellt. Der Auslegungspunkt für diesen Antrieb ist mit P1 gekennzeichnet. Diese Kennlinie müsste ein Direktantrieb aufweisen, der bei geringer Leerlaufdrehzahl von etwa 800 Umdrehungen pro Minute eine ausreichende Förderung sicherstellt. Ein Vergleich der Kennlinien IV und I zeigt deutlich, dass durch die Kombination mit dem zuschaltbaren Elektroantrieb 7 eine besonders leistungsschwache und damit kompakte Ölpumpe 5 eingesetzt werden kann.

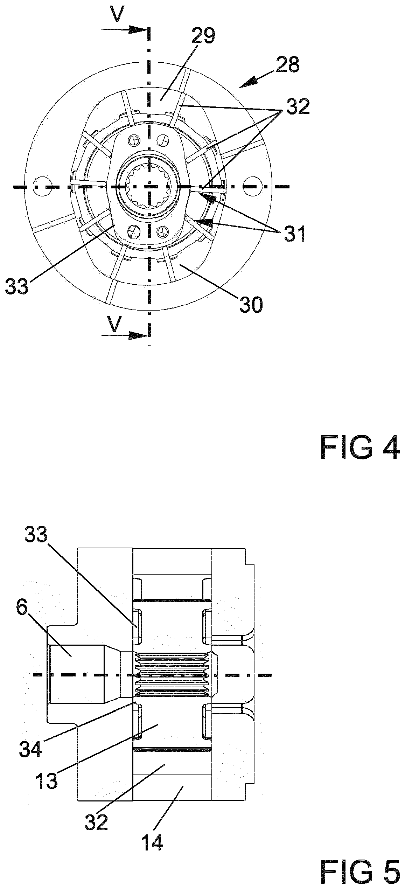

Figur 4 zeigt eine doppelhubige Flügelzellenpumpe 28, welche als Ölpumpe 5 nach den Figuren 1 und 2 bevorzugt eingesetzt ist. Die Flügelzellenpumpe hat zwei Hubräume 29, 30. Die Flügelzellenpumpe 28 hat in dem Rotor 13 mit Führungen 31 für ausfahrbare Flügel 32. Ein feststehendes, in den Rotor 13 hineinragendes Führungselement 33 spannt die Flügel 32 radial nach außen gegen das Läuferteil 14 der Ölpumpe 5 vor. Das Führungselement 33 hat eine der Innenkontur des Läuferteils 14 entsprechende Außenkontur. Die Flügel 32 haben durch das Führungselement 33 eine Zwangsführung, so dass eine Förderung des Öls unmittelbar mit dem Start der Ölpumpe 5 sichergestellt ist. Damit kann diese Ölpumpe 5 auch zur Förderung von Motoröl in einem Schmierölkreislauf der Brennkraftmaschine 1 eingesetzt werden.

Figur 5 zeigt eine Schnittdarstellung durch die Flügelzellenpumpe 28 aus Figur 4 entlang der Linie IV - IV. Hierbei ist zu erkennen, dass der Rotor 22 über einen Dichtsteg 34 gegenüber dem Läuferteil 14 abgedichtet ist.

## Patentansprüche

1. Fördereinrichtung (2) für ein Kraftfahrzeug mit zur Förderung von Öl aus einem Ölsumpf (3) zu einem Schmierölkreislauf einer Brennkraftmaschine (1) oder zu einem Getriebe mit einer von einem mechanischen Direktantrieb (6) und von einem zuschaltbaren Elektroantrieb (7) antreibbaren Ölpumpe (5), wobei die Ölpumpe (5) mit einem Rotor (13) und einem den Rotor (13) umschließenden Läuferteil (14) zwei relativ zueinander bewegliche Bauteile zur Förderung des Öls hat und der mechanische Direktantrieb (6) mit einem ersten der relativ zueinander beweglichen Bauteile und der zuschaltbare Elektroantrieb (7) mit einem zweiten der relativ zueinander beweglichen Bauteile verbunden ist, **wobei** die Leistung der Ölpumpe (5) über den Direktantrieb (6) auf einen Arbeitspunkt bei mittlerer oder hoher Drehzahl der Brennkraftmaschine (1) und Betriebstemperatur ausgelegt ist und der zuschaltbare Elektroantrieb (7) mit einer Steuereinrichtung (9) zur Erhöhung der Leistung der Ölpumpe (5) auf den tatsächlichen Bedarf verbunden ist,
**dadurch gekennzeichnet, dass** ein eine Druckseite (15) der Ölpumpe (5) von der Umgebung trennender Gehäusetopf (16) eine zu einem Wellenabschnitt (17) des zuschaltbaren Elektroantriebs (7) geführte Verjüngung (18) hat, dass die Verjüngung (18) drehfest mit dem Wellenabschnitt (17) verbunden ist und gegenüber einem Gehäuseteil (21) der Ölpumpe (5) abgedichtet ist.

2. Fördereinrichtung nach Anspruch 1, **dadurch gekennzeichnet, dass** die Ölpumpe (5) in Strömungsrichtung gesehen vor einem Auslasskanal (25) ein Überdruckventil (26) aufweist.

3. Fördereinrichtung nach Anspruch 1 oder 2, **dadurch gekennzeichnet, dass** die Steuereinrichtung (9) einen Generatormodus für den zuschaltbaren Elektroantrieb (7) zur Verringerung der Leistung der Ölpumpe (5) hat.

4. Fördereinrichtung nach einem der Ansprüche 1 bis 3,
**dadurch gekennzeichnet, dass** das von dem zuschaltbaren Elektroantrieb (7) angetriebene Bauteil einen Freilauf (19) oder eine Bremse zur Abstützung des von dem Direktantrieb (6) erzeugen Moments hat.

5. Fördereinrichtung nach Anspruch 4, **dadurch gekennzeichnet, dass** der Freilauf (19) oder die Bremse eine Antriebswelle des zuschaltbaren Elektroantriebs (7) gegenüber einem Gehäuseteil abstützt.

6. Fördereinrichtung nach einem der Ansprüche 1 bis 5,
**dadurch gekennzeichnet, dass** die Ölpumpe (5) als doppelhubige Flügelzellenpumpe (28) mit zwei einander gegenüberliegenden Hubräumen (29, 30) ausgebildet ist.

7. Fördereinrichtung nach Anspruch 6, **dadurchgekennzeichnet,** dass die doppelhubige Flügelzellenpumpe (28) ein feststehendes Führungselement (33) zur Vorspannung der Flügel (32) gegen das radial äußere Läuferteil (14) hat.

8. Fördereinrichtung nach Anspruch 7, **dadurchgekennzeichnet,** dass das feststehende Führungselement (33) in den Rotor (22) hineinragt.

## Claims

1. Delivery device (2) for a motor vehicle for delivering oil from an oil sump (3) to a lubricating oil circuit of an internal combustion engine (1) or to a transmission, having an oil pump (5) which can be driven by a mechanical direct drive (6) and by an activatable electric drive (7), wherein the oil pump (5), with a rotor (13) and with a runner part (14) surrounding the rotor (13), has two components, which are movable relative to one another, for delivering the oil, and the mechanical direct drive (6) is connected to a first of the components that are movable relative to one another, and the activatable electric drive (7) is connected to a second of the components that are movable relative to one another, wherein the power of the oil pump (5) by means of the direct drive (6) is configured for an operating point at medium or high rotational speed of the internal combustion engine (1) and operating temperature, and the activatable electric drive (7) is connected to a control device (9) for increasing the power of the oil pump (5) to the actual requirement,
**characterized in that** a pot-shaped housing structure (16) which separates a pressure side (15) of the oil pump (5) from the surroundings has a narrowed portion (18) which leads to a shaft section (17) of the activatable electric drive (7), and **in that** the narrowed portion (18) is connected rotationally conjointly to the shaft section (17) and is sealed off with respect to a housing part (21) of the oil pump (5).

2. Delivery device according to Claim 1, **characterized in that** the oil pump (5) has an overpressure valve (26) upstream of an outlet duct (25) as viewed in a flow direction.

3. Delivery device according to Claim 1 or 2, **characterized in that** the control device (9) has a generator mode for the activatable electric drive (7) for the purposes of reducing the power of the oil pump (5).

4. Delivery device according to any one of Claims 1 to 3, **characterized in that** the component that is driven by the activatable electric drive (7) has a freewheel (19) or a brake for supporting the torque generated by the direct drive (6).

5. Delivery device according to Claim 4, **characterized in that** the freewheel (19) or the brake supports a drive shaft of the activatable electric drive (7) with respect to a housing part.

6. Delivery device according to any one of Claims 1 to 5, **characterized in that** the oil pump (5) is formed as a double-stroke vane-type pump (28) with two mutually oppositely situated swept volumes (29, 30) .

7. Delivery device according to Claim 6, **characterized in that** the double-stroke vane-type pump (28) has a static guide element (33) for preloading the vanes (32) against the radially outer runner part (14).

8. Delivery device according to Claim 7, **characterized in that** the fixed guide element (33) projects into the rotor (22).

## Revendications

1. Dispositif de transport (2) pour un véhicule automobile, comprenant une pompe à huile (5) destinée à transporter de l'huile depuis un carter d'huile (3) vers un circuit d'huile de lubrification d'un moteur à combustion interne (1) ou vers une boîte de vitesses et pouvant être entraînée par un entraînement direct mécanique (6) et par un entraînement électrique (7) pouvant être mis en circuit, la pompe à huile (5), avec un rotor (13) et une partie roue motrice (14) qui entoure le rotor (13), possédant deux éléments structuraux mobiles l'un par rapport à l'autre en vue de transporter l'huile et l'entraînement direct mécanique (6) étant relié à un premier des éléments structuraux mobiles l'un par rapport à l'autre et l'entraînement électrique (7) pouvant être mis en circuit à un deuxième des éléments structuraux mobiles l'un par rapport à l'autre, la puissance de la pompe à huile (5) par le biais de l'entraînement direct mécanique (6) étant conçue à un point de fonctionnement à vitesse de rotation moyenne ou élevée du moteur à combustion interne (1) et à la température de service et l'entraînement électrique (7) pouvant être mis en circuit étant relié à un dispositif de commande (9) en vue d'élever la puissance de la pompe à huile (5) au besoin réel,
**caractérisé en ce qu'**un pot de carter (16) qui sépare un côté refoulement (15) de la pompe à huile (5) de l'environnement possède un rétrécissement (18) menant à une portion d'arbre (17) de l'entraînement électrique (7) pouvant être mis en circuit, **en ce que** le rétrécissement (18) est relié en rotation solidaire avec la portion d'arbre (17) et est rendu étanche par rapport à une partie de carter (21) de la pompe à huile (5).

2. Dispositif de transport selon la revendication 1, **caractérisé en ce que** la pompe à huile (5), vue dans le sens de l'écoulement, présente une soupape de surpression (26) avant un canal de sortie (25).

3. Dispositif de transport selon la revendication 1 ou 2, **caractérisé en ce que** le dispositif de commande (9) possède un mode générateur pour l'entraînement électrique (7) pouvant être mis en circuit en vue de réduire la puissance de la pompe à huile (5).

4. Dispositif de transport selon l'une des revendications 1 à 3, **caractérisé en ce que** l'élément structural entraîné par l'entraînement électrique (7) pouvant être mis en circuit possède un élément de roue libre (19) ou un frein destiné à assister le couple généré par l'entraînement direct (6).

5. Dispositif de transport selon la revendication 4, **caractérisé en ce que** l'élément de roue libre (19) ou le frein soutient un arbre d'entraînement de l'entraînement électrique (7) pouvant être mis en circuit par rapport à une partie de carter.

6. Dispositif de transport selon l'une des revendications 1 à 5, **caractérisé en ce que** la pompe à huile (5) est réalisée sous la forme d'une pompe à palettes (28) à double excursion comprenant deux cylindrées (29, 30) mutuellement opposées.

7. Dispositif de transport selon la revendication 6, **caractérisé en ce que** la pompe à palettes (28) à double excursion possède un élément de guidage fixe (33) destiné à précontraindre les ailettes (32) contre la partie de roue motrice (14) externe dans le sens radial.

8. Dispositif de transport selon la revendication 7, **caractérisé en ce que** l'élément de guidage fixe (33) fait saillie à l'intérieur du rotor (22).
